# EUROPÄISCHE PATENTSCHRIFT

(11) **EP 3 973 511 B1**
(45) Veröffentlichungstag und Bekanntmachung des Hinweises auf die Patenterteilung: **09.09.2026**
(21) Anmeldenummer: 20728935.6
(22) Anmeldetag: 12.05.2020
(51) Int. Cl.: G06T 15/04, G06T 15/50, B60R 1/27, G06T 5/50, G06T 5/94, G06V 20/58

(54) **VERFAHREN ZUR ERZEUGUNG EINES BILDES EINER FAHRZEUGUMGEBUNG UND VORRICHTUNG ZUR ERZEUGUNG EINES BILDES EINER FAHRZEUGUMGEBUNG**
METHOD FOR GENERATING AN IMAGE OF VEHICLE SURROUNDINGS, AND APPARATUS FOR GENERATING AN IMAGE OF VEHICLE SURROUNDINGS
PROCÉDÉ POUR GÉNÉRER UNE IMAGE DE L'ENVIRONNEMENT D'UN VÉHICULE ET DISPOSITIF POUR GÉNÉRER UNE IMAGE DE L'ENVIRONNEMENT D'UN VÉHICULE

(30) Priorität: 21.05.2019 DE 102019207415
(43) Veröffentlichungstag der Anmeldung: 30.03.2022
(73) Patentinhaber: AUMOVIO Autonomous Mobility Germany GmbH, 85057 Ingolstadt (DE)
(72) Erfinder: KUTSCHERA, Thomas, 90411 Nürnberg (DE); WIEST, Joachim, 90411 Nürnberg (DE); FRIEBE, Markus, 90411 Nürnberg (DE)
(74) Vertreter: Aumovio Corporation
(86) Internationale Anmeldenummer: PCT/DE2020/200034
(87) Internationale Veröffentlichungsnummer: WO 2020/233755

(56) Entgegenhaltungen:
- DE-A1- 102013 211 650
- DE-A1- 102014 207 897
- DE-A1- 102014 210 323
- DE-A1- 102016 124 989
- DE-A1- 102017 123 452

## Beschreibung

Die Erfindung betrifft ein Verfahren sowie eine Vorrichtung zur Erzeugung eines Bildes einer Fahrzeugumgebung.

Fahrzeuge werden zunehmend mit Fahrerassistenzsystemen ausgerüstet, welche den Fahrer bei der Durchführung von Fahrmanövern unterstützen. Diese Fahrerassistenzsysteme enthalten zum Teil Kamera-Surround-View-Systeme, die es erlauben, dem Fahrer des Fahrzeugs die Fahrzeugumgebung anzuzeigen. Derartige Kamera-Surround-View-Systeme umfassen mehrere Fahrzeugkameras, welche reale Bilder der Fahrzeugumgebung liefern, die insbesondere durch eine Datenverarbeitungseinheit des Kamera-Surround-View-Systems zu einem Umgebungsbild der Fahrzeugumgebung zusammengefügt werden. Das Bild der Fahrzeugumgebung wird dann dem Fahrer vorteilhafterweise auf einer Anzeigeeinheit angezeigt. Auf diese Weise kann der Fahrer bei einem Fahrzeugmanöver unterstützt werden, beispielsweise bei einem Rückwärtsfahren des Fahrzeuges oder bei einem Parkmanöver. Ein Beispiel für ein derartiges Fahrerassistenzsystem findet sich in der Offenlegungsschrift DE102016124989.

Die von den benachbarten Fahrzeugkameras gelieferten Kamerabilder überlappen sich in Überlappungsbereichen. Wenn sich die Fahrzeugkameras an verschiedenen Seiten des Fahrzeuges befinden, kann es vorkommen, dass die Lichtverhältnisse für die unterschiedlichen Fahrzeugkameras unterschiedlich sind. Beispielsweise kann das Sonnenlicht die Umgebung des Fahrzeuges von einer Seite bestrahlen. Darüber hinaus kann es durch die befahrene Strecke zu unterschiedlichen Lichtverhältnissen für die verschiedenen Fahrzeugkameras kommen. Wenn beispielsweise ein Fahrzeug in einen Fahrzeugtunnel einfährt, ist die Umgebung der vorderen Fahrzeugkamera plötzlich dunkel, während die Umgebung der hinteren Fahrzeugkamera durch das Tageslicht gut beleuchtet ist. Bei herkömmlichen Surround-View-Systemen kommt es daher innerhalb des zusammengesetzten Gesamtbildes bzw. Surround-View-Bildes zu Bildartefakten, insbesondere zu Helligkeitssprüngen, innerhalb des Gesamtbildes, die durch die unterschiedlichen Beleuchtungsverhältnisse für die unterschiedlichen Fahrzeugkameras hervorgerufen werden.

Ausgehend hiervon ist es nun Aufgabe der Erfindung, ein Verfahren bzw. eine Vorrichtung bereitzustellen, mit dem bzw. mit der die bestehenden Probleme basierend auf den Helligkeitsunterschieden benachbarter Fahrzeugkamera beseitigt werden können.

Die Aufgabe wird durch ein Verfahren mit den Merkmalen des unabhängigen Patentanspruchs 1 gelöst. Eine Vorrichtung ist Gegenstand des nebengeordneten Patentanspruchs. Bevorzugte Ausführungsformen sind Gegenstand der Unteransprüche.

Gemäß einem ersten Aspekt bezieht sich die vorliegende Erfindung auf ein Verfahren zur Erzeugung eines Bildes einer Fahrzeugumgebung gemäß Anspruch 1.

Das erfindungsgemäße Verfahren sorgt insbesondere dafür, dass die Bildqualität in einer dreidimensionalen virtuellen Darstellung der Surround-Ansicht in den sichtbaren Bereichen verbessert werden kann. Ferner können durch das erfindungsgemäße Verfahren die Helligkeitsunterschiede benachbarter Kameras beseitigt werden.

Die Verfahrensschritte werden insbesondere in der angegebenen Reihenfolge durchgeführt.

Indem benachbarte Fahrzeugkameras zumindest teilweise denselben Bereich erfassen, weisen Kamerabilder benachbarter Fahrzeugkameras bzw. benachbarte Kamerabilder folglich überlappende Bildbereiche auf. Anders ausgedrückt, dadurch, dass sich Sichtbereiche benachbarter Fahrzeugkameras zumindest teilweise überlappen, weisen benachbarte Fahrzeugkameras folglich Überlappungsbereiche auf.

Die virtuelle Repräsentation der Umgebung in dem virtuellen dreidimensionalen Raum wird bevorzugt durch eine Recheneinheit erzeugt. Die virtuelle Repräsentation ist oder umfasst dabei insbesondere eine dreidimensionale Repräsentation der Umgebung. In einer bevorzugten Ausgestaltung kann die virtuelle Projektionsfläche eine gewölbte virtuelle Projektionsfläche umfassen bzw. als eine solche ausgebildet sein. Die Projektionsfläche kann bereichsweise oder gänzlich gewölbt sein. Vorteilhafterweise ist die virtuelle Projektionsfläche schüsselförmig ausgebildet. Insbesondere weist die schüsselförmig ausgebildete virtuelle Projektionsfläche einen im Wesentlichen ebenen Boden auf. Der im Wesentlichen ebene Boden geht bevorzugt in gewölbte Seitenwände über.

Im Sinne der Erfindung kann es sich bei dem Auswahlbereich um einen einzelnen Bildpunkt handeln. Es kann sich aber auch um einen Bereich bzw. eine Mehrzahl an Bildpunkten handeln. Von Vorteil ist es, wenn der Bereich möglichst klein gewählt wird. Hierdurch kann eine möglichst gute visuelle Qualität geschaffen werden. Die Qualität kann weiter dadurch verbessert werden, wenn in dem Bereich bzw. in einem kleineren Bereich mehrere Messpunkte gewählt werden.

Bei den Fahrzeugkameras handelt es sich bevorzugt um Kameras eines Surround-View-Systems. Es handelt sich hierbei insbesondere um vier Kameras, die idealerweise an unterschiedlichen Seiten des Fahrzeugs angeordnet sind. Bevorzugt ist eine Fahrzeugkamera an einer vorderen Seite, eine Fahrzeugkamera an einer Rückseite, eine Fahrzeugkamera an einer linken Seite und eine Fahrzeugkamera an einer rechten Seite des Fahrzeugs angeordnet. Die Fahrzeugkameras können als Fisheye-Kameras ausgebildet sein. Von Vorteil ist es, dass die mehreren Fahrzeugkameras baugleich ausgebildet sind.

In einer bevorzugten Ausgestaltung der vorliegenden Erfindung wird ein zweiter Auswahlbereich auf der virtuellen Projektionsfläche innerhalb eines zweiten überlappenden Bildbereichs in Abhängigkeit des Sichtbereichs der virtuellen Kamera platziert. In einem weiteren Schritt wird zumindest ein Bildparameter einer weiteren Fahrzeugkamera, deren Kamerabild den zweiten überlappenden Bildbereich aufweist, im zweiten Auswahlbereich berechnet. Bei der weiteren Fahrzeugkamera handelt es sich bevorzugt um eine dritte Fahrzeugkamera. Es ist aber auch möglich, dass es sich bei der Fahrzeugkamera um die zweite Fahrzeugkamera handelt. In einem nächsten Schritt wird zumindest ein Bildparameter einer anderen Fahrzeugkamera, deren Kamerabild ebenfalls den zweiten überlappenden Bildbereich aufweist, an den zumindest einen Bildparameter der weiteren Fahrzeugkamera im zweiten Auswahlbereich angepasst. Bei der anderen Fahrzeugkamera handelt es sich bevorzugt um die zweite Fahrzeugkamera. Es kann sich bei der anderen Fahrzeugkamera aber auch um eine dritte Fahrzeugkamera handeln.

Bevorzugt sind die Auswahlbereiche, insbesondere der erste bzw. der zweite Auswahlbereich, unabhängig von der Position des anderen Bereichs. Insbesondere befinden sich der erste und der zweite Auswahlbereich auf unterschiedlichen Achsen und/oder unterschiedlichen Höhen. Die Auswahlbereiche befinden sich insbesondere nicht auf derselben Koordinatenachse. Wird der virtuelle dreidimensionale Raum betrachtet, dann befinden sich die zwei Auswahlbereiche insbesondere auf unterschiedlichen Ebenen bzw. Höhen im virtuellen dreidimensionalen Raum.

Vorteilhafterweise erfolgt eine Anpassung eines Bildes und/oder von Bildparametern der Fahrzeugkamera, die den ersten und den zweiten überlappenden Bildbereich aufweist, zwischen dem ersten und dem zweiten Auswahlbereich mittels einer (örtlichen) Interpolation bzw. mittels einer Interpolationsfunktion. Zudem werden insbesondere die ermittelten Bildparameter in den Auswahlbereichen berücksichtigt. Bei der Fahrzeugkamera handelt es sich bevorzugt um die zweite Fahrzeugkamera. Durch die Interpolation kann ein besonders weicher visueller Übergang zwischen den Auswahlbereichen geschaffen werden.

In einer Ausgestaltung kann eine lineare Interpolation zum Einsatz kommen, wobei die Formel wie folgt aussehen kann: (1-alpha)*a+alpha*b. Alpha kann in einem Bereich zwischen 0 und 1 liegen und beschreibt die Entfernung zwischen einem Auswahlbereich a und einem Auswahlbereich b, wobei die Entfernung durch 3D-Vektoren beschrieben werden kann.

In einer Ausgestaltung der vorliegenden Erfindung wird bei der Interpolation die Position des Auswahlbereichs bzw. die Positionen der Auswahlbereiche berücksichtigt. Bevorzugt wird die dreidimensionale Position des Auswahlbereichs bzw. die dreidimensionale Position der Auswahlbereiche berücksichtigt. Entweder zusätzlich oder alternativ dazu können die X-, Y- und Z-Koordinatenwerte eines gegenwärtig gerenderten Punkts, der insbesondere zwischen dem ersten und dem zweiten Auswahlbereich liegt, berücksichtigt werden. Bevorzugt werden mehrere Koordinatenwerte berücksichtigt, wenn die Auswahlbereiche nicht auf derselben und/oder entlang derselben Koordinatenachse angeordnet sind. Es werden also insbesondere nicht nur X-Koordinatenwerte, sondern daneben auch Y- und/oder Z-Koordinatenwerte berücksichtigt. Hierdurch kann insbesondere eine flexiblere und anpassungsfähigere Anwendung von Harmonisierungswerten erreicht werden. Bei den bekannten Verfahren wird die Interpolation zwischen den Helligkeitsdifferenzen nur entlang einer Achse, beispielsweise einer x-Achse, angewendet; die anderen Werte, beispielsweise die y- und z-Werte, werden nicht berücksichtigt.

In einer bevorzugten Ausgestaltung erfolgt das Platzieren eines Auswahlbereichs, insbesondere eines ersten und/oder eines zweiten Auswahlbereichs, dadurch, dass in einem ersten Schritt der Auswahlbereich an einer Standardposition innerhalb eines überlappenden Bildbereiche platziert wird. Bei dem Bildbereich kann es sich sowohl um den ersten wie auch den zweiten überlappenden Bildbereich handeln. In einem weiteren bzw. darauffolgenden Schritt wird dann überprüft, ob der Auswahlbereich an der Standardposition für die virtuelle Kamera sichtbar ist. Der Auswahlbereich kann beispielsweise für die virtuelle Kamera dann nicht sichtbar sein, wenn der Auswahlbereich außerhalb des Sichtbereichs der virtuellen Kamera liegt, insbesondere außerhalb des Field of View. Ein weiterer Grund kann sein, dass in dem virtuellen dreidimensionalen Raum ein virtuelles Fahrzeugmodell eingefügt ist, welches von der virtuellen Projektionsfläche umgeben ist. Das Fahrzeugmodell liegt hier dann insbesondere im Wesentlichen zwischen der Position der virtuellen Kamera und dem Auswahlbereich.

Ist der Auswahlbereich für die virtuelle Kamera sichtbar, dann verbleibt der Auswahlbereich bevorzugt an der Standardposition. Ist der Auswahlbereich jedoch für die virtuelle Kamera nicht sichtbar, dann kann dieser auf der virtuellen Projektionsfläche innerhalb des überlappenden Bildbereichs verschoben werden. Der Auswahlbereich wird insbesondere solange verschoben, bis er für die virtuelle Kamera sichtbar wird.

Die Standardposition kann in einem Speicher hinterlegt sein. Es ist von Vorteil, wenn bei der Ausführung des erfindungsgemäßen Verfahrens der Auswahlbereich erst einmal auf die Standardposition platziert wird.

Der Auswahlbereich kann auf bzw. kann wieder auf die Standardposition platziert werden, wenn sich bei der Überprüfung herausstellt, dass es keinen Auswahlbereich innerhalb des überlappenden Bildbereichs gibt, der für die virtuelle Kamera sichtbar ist. Die Standardposition kann somit insbesondere auch als Ausweichposition bzw. als Rückfallposition benutzt werden.

In einer vorteilhaften Ausgestaltung der vorliegenden Erfindung werden Parameter eines Fahrzeugmodells bereitgestellt, wobei die Parameter bevorzugt in dem virtuellen dreidimensionalen Raum eingefügt werden. Bei den Parametern kann es sich vorteilhafterweise zumindest um die Höhe und/oder die Länge und/oder die Breite eines Fahrzeugs handeln. Es ist aber auch denkbar, dass es sich bei den Parametern um ein virtuelles Fahrzeugmodell handelt. Die Parameter sind bevorzugt in einem Modell-Speicher hinterlegt.

Die virtuelle Projektionsfläche umgibt bevorzugt die Parameter des Fahrzeugmodells im virtuellen Raum. Ist die virtuelle Projektionsfläche schüsselförmig ausgebildet und weist einen im Wesentlichen ebenen Schüsselboden auf, dann sind die Parameter des Fahrzeugmodell bzw. das virtuelle Fahrzeugmodell bevorzugt auf dem Boden angeordnet. Besonders bevorzugt sind die Parameter des Fahrzeugmodell bzw. das virtuelle Fahrzeugmodell im Wesentlichen in der Mitte auf dem Boden angeordnet.

Bevorzugt handelt es sich bei den Bildparametern um eine Bildhelligkeit, einen Bildkontrast, eine Bildfarbe, eine Bildschärfe, eine Farbsättigung und/oder eine Texturfrequenz.

In einer vorteilhaften Ausgestaltung handelt es sich bei der ersten Fahrzeugkamera um eine vordere Fahrzeugkamera. Die erste Fahrzeugkamera weist im Wesentlichen einen Sichtbereich auf, der einen Bereich vor dem Fahrzeug erfasst. Wenn die erste Fahrzeugkamera eine vordere Fahrzeugkamera ist, dann ist bevorzugt die dritte Kamera eine hintere Fahrzeugkamera. Die hintere Fahrzeugkamera weist im Wesentlichen einen Sichtbereich auf, der einen Bereich hinter dem Fahrzeug erfasst. Die vordere und die hintere Fahrzeugkamera weisen bevorzugt in entgegengesetzte Richtungen und/oder weisen bevorzugt dieselbe optische Achse auf. Es ist aber auch denkbar, dass die erste Fahrzeugkamera eine hintere Fahrzeugkamera ist und/oder die dritte Fahrzeugkamera eine vordere Fahrzeugkamera ist.

In einer bevorzugten Ausgestaltung der vorliegenden Erfindung handelt es sich bei der zweiten Fahrzeugkamera um eine seitliche Fahrzeugkamera. Die Fahrzeugkamera weist im Wesentlichen einen Sichtbereich auf, der einen Bereich neben dem Fahrzeug erfasst. Besonders bevorzugt handelt es sich bei der zweiten Fahrzeugkamera um eine linke oder eine rechte Fahrzeugkamera. Die zweite Fahrzeugkamera kann an einem Außenspiegel eines Fahrzeugs angeordnet sein.

In einer besonders vorteilhaften Ausgestaltung des vorliegenden Verfahrens werden die Bildparameter der linken und/oder der rechten Fahrzeugkamera, insbesondere die Helligkeit der linken und/oder rechten Kamerabilder, an die Bildparameter der vorderen und/oder der hinteren Fahrzeugkamera, insbesondere an die Helligkeit der vorderen und/oder hinteren Kamerabilder angepasst. Die Bildparameter der linken und/oder der rechten Fahrzeugkamera entsprechen dadurch dann insbesondere den Bildparametern der vorderen und/oder der hinteren Fahrzeugkamera an Verbindungsstellen. Dies kann erfindungsgemäß dadurch erreicht werden, dass die erste Fahrzeugkamera eine vordere Fahrzeugkamera ist, die weitere Fahrzeugkamera eine hintere Fahrzeugkamera ist, und die zweite und die andere Fahrzeugkamera ein und dieselbe Fahrzeugkamera ist und einer seitlichen Fahrzeugkamera entspricht. Ferner kann dies dadurch erreicht werden, dass die erste Fahrzeugkamera eine hintere Fahrzeugkamera ist, die weitere Fahrzeugkamera eine vordere Fahrzeugkamera ist, und die zweite und die andere Fahrzeugkamera ein und dieselbe Fahrzeugkamera ist und einer seitlichen Fahrzeugkamera entspricht.

Gemäß einem zweiten Aspekt bezieht sich die Erfindung auf eine Vorrichtung zur Erzeugung eines Bildes einer Fahrzeugumgebung gemäß Anspruch 10.

Die Vorrichtung eignet sich insbesondere zur Durchführung des erfindungsgemäßen Verfahrens.

Die virtuelle Kamera kann in dem virtuellen dreidimensionalen Raum frei bewegt werden bzw. ist frei bewegbar. Auch lässt sich die virtuellen Kameraausrichtung frei bewegen. Somit kann insbesondere jeder Bereich in der Umgebung des Fahrzeugs, welcher durch die Fahrzeugkameras erfasst wird, betrachtet werden.

In einer bevorzugten Ausgestaltung der erfindungsgemäßen Vorrichtung ist die Recheneinrichtung dazu ausgelegt, einen zweiten Auswahlbereich auf der virtuellen Projektionsfläche innerhalb eines zweiten überlappenden Bildbereichs in Abhängigkeit des Sichtbereichs der virtuellen Kamera zu platzieren, zumindest einen Bildparameter einer weiteren Fahrzeugkamera, deren Kamerabild den zweiten überlappenden Bildbereich aufweist, im zweiten Auswahlbereich zu berechnen und zumindest einen Bildparameter einer anderen Fahrzeugkamera, deren Kamerabild ebenfalls den zweiten überlappenden Bildbereich aufweist, an den zumindest einen Bildparameter der weiteren Fahrzeugkamera im zweiten Auswahlbereich anzupassen. Die Recheneinheit kann ferner derart ausgebildet sein, dass eine Anpassung von Bildparametern der Fahrzeugkamera, die den ersten und den zweiten überlappenden Bildbereich bzw. den ersten und den zweiten Auswahlbereich aufweist, zwischen dem ersten und dem zweiten Auswahlbereich mittels einer Interpolation erfolgt.

Weitere vorteilhafte Ausgestaltungen ergeben sich aus den Zeichnungen. Hierbei zeigen:
- Fig. 1:: schematische Darstellung eines Ablaufdiagramms eines erfindungsgemäßen Verfahrens in einer Ausgestaltung;
- Fig. 2:: schematische Darstellung einer erfindungsgemäßen Vorrichtung in einer Ausgestaltung;
- Fig. 3:: schematische Draufsicht auf eine virtuelle Repräsentation einer Fahrzeugumgebung;
- Fig. 4:: schematische Ansicht einer virtuellen Kamera.

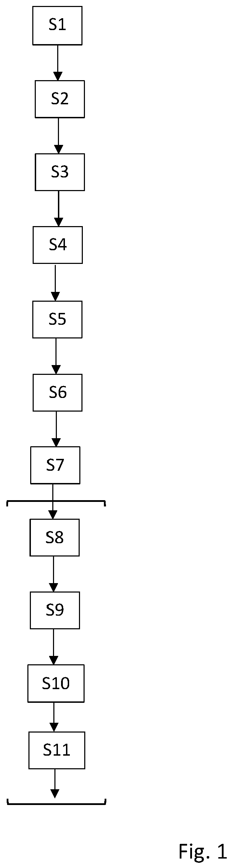

Figur 1 zeigt eine schematische Darstellung eines Ablaufdiagramms eines erfindungsgemäßen Verfahrens zur Erzeugung eines Bildes einer Fahrzeugumgebung in einer Ausgestaltung.

In einem ersten Verfahrensschritt S1 wird die Fahrzeugumgebung durch mehrere Fahrzeugkameras 12, 14, 16, 18 erfasst. Die Fahrzeugkameras 12, 14, 16, 18 sind insbesondere an einer Fahrzeugkarosserie eines Fahrzeuges angeordnet. In einem Schritt S2 werden Kamerabilder durch die mehreren Fahrzeugkameras 12, 14, 16, 18 erzeugt, wobei die Kamerabilder benachbarter Fahrzeugkameras 12, 14, 16, 18 überlappende Bildbereiche 40, 42, 44, 46 aufweisen.

In einem dritten Schritt S3 wird dann eine virtuelle Repräsentation der Umgebung in einem virtuellen dreidimensionalen Raum 60 erzeugt. Hierbei erfolgt auch ein Projizieren von den Kamerabildern auf eine virtuelle Projektionsfläche 62. In einem vierten Schritt S4 wird eine nicht stationäre, virtuelle Kamera 48 in dem virtuellen Raum 60 bereitgestellt. Ferner wird auch eine virtuelle Kameraposition und/oder eine virtuelle Kameraausrichtung berechnet.

Gemäß einer bevorzugten Ausgestaltung können zudem Parameter eines Fahrzeugmodells oder ein Fahrzeugmodell als solches bereitgestellt werden, wobei die Parameter bzw. das Fahrzeugmodell bevorzugt in dem virtuellen dreidimensionalen Raum eingefügt werden.

In einem fünften Schritt S5 wird ein erster Auswahlbereich 56 auf der virtuellen Projektionsfläche 62 in einem ersten überlappenden Bildbereich 40 in Abhängigkeit eines Sichtbereichs 50 der virtuellen Kamera 48 bestimmt. Die Bestimmung des ersten Auswahlbereichs 56 erfolgt insbesondere dadurch, dass in einem ersten Schritt der Auswahlbereich 56' an einer Standardposition innerhalb eines überlappenden Bildbereichs platziert wird. In einem darauffolgenden Schritt wird dann überprüft, ob der Auswahlbereich 56' an der Standardposition für die virtuelle Kamera 48 sichtbar ist. Ist der Auswahlbereich für die virtuelle Kamera 48 sichtbar, dann verbleibt der Auswahlbereich bevorzugt an der Standardposition. Ist der Auswahlbereich 56' jedoch für die virtuelle Kamera 48 nicht sichtbar, dann wird dieser auf der virtuellen Projektionsfläche 62 innerhalb des überlappenden Bildbereichs 40 verschoben.

Ist ein erster Auswahlbereich 56 bestimmt worden, dann wird in einem sechsten Schritt S6 zumindest ein Bildparameter einer ersten Fahrzeugkamera 12 im ersten Auswahlbereich 56 bestimmt. In einem anschließenden siebten Schritt S7 wird dann zumindest ein Bildparameter einer zweiten Fahrzeugkamera 14 an den zumindest einen Bildparameter der ersten Fahrzeugkamera 12 im ersten Auswahlbereich 56 angepasst.

Wie in Figur 1 dargestellt, kann neben dem Bestimmen eines ersten Auswahlbereichs auch weitere Auswahlbereiche bestimmt werden. Hierzu wird insbesondere in einem achten Schritt S8 ein zweiter Auswahlbereich 58 auf der virtuellen Projektionsfläche 62 innerhalb eines zweiten überlappenden Bildbereichs 42 in Abhängigkeit des Sichtbereichs 50 der virtuellen Kamera 48 bestimmt. Die Bestimmung des zweiten Auswahlbereichs 58 kann analog wie die Bestimmung des ersten Auswahlbereichs 56 erfolgen. Ist ein zweiter Auswahlbereich 58 platziert, dann wird bevorzugt in einem Schritt S9 zumindest ein Bildparameter einer weiteren Fahrzeugkamera 16, deren Kamerabild den zweiten überlappenden Bildbereich 42 aufweist, im zweiten Auswahlbereich 58 berechnet. In einem Schritt S10 wird dann bevorzugt zumindest ein Bildparameter einer anderen Fahrzeugkamera 14, deren Kamerabild ebenfalls den zweiten überlappenden Bildbereich 42 aufweist, an den zumindest einen Bildparameter der weiteren Fahrzeugkamera 16 im zweiten Auswahlbereich 58 angepasst. In einem Schritt S11 können dann die Bildparameter der Fahrzeugkamera 14, die sowohl den ersten 40 als auch den zweiten überlappenden Bildbereich 42 aufweist, zwischen dem ersten 56 und dem zweiten Auswahlbereich 58 mittels einer Interpolation berechnet werden.

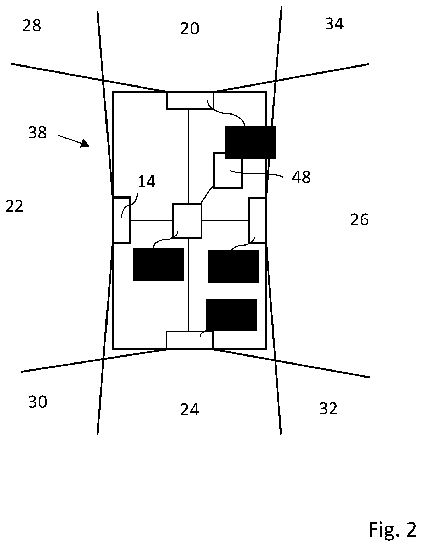

Figur 2 zeigt eine schematische Darstellung einer erfindungsgemäßen Vorrichtung 38 in einer Ausgestaltung. Die Vorrichtung 38 weist mehrere Fahrzeugkameras 12, 14, 16, 18 zur Erfassung der Fahrzeugumgebung und Erzeugung von Kamerabildern auf. Sichtbereiche 20, 22, 24, 26 benachbarter Fahrzeugkameras 12, 14, 16, 18 überlappen sich zumindest teilweise. Hierdurch weisen benachbarte Fahrzeugkameras 12, 14, 16, 18 folglich Überlappungsbereiche 28, 30, 32, 34 auf. Zudem können hierdurch Kamerabilder benachbarter Fahrzeugkameras 12, 14, 16, 18 überlappende Bildbereiche 40, 42, 44, 46 aufweisen.

Wie in Figur 2 ersichtlich, kann die Vorrichtung 38 ferner eine nicht stationäre virtuelle Kamera 48 aufweisen. Des Weiteren umfasst die Vorrichtung 38 noch eine Recheneinheit 36. Die Recheneinheit 36 ist derart ausgebildet, dass eine virtuelle Repräsentation der Umgebung in einem virtuellen dreidimensionalen Raum 60 erzeugt wird, wobei bei der Erzeugung ein Projizieren der Kamerabilder auf eine virtuelle Projektionsfläche 62 in dem dreidimensionalen virtuellen Raum 60 erfolgt. Ferner ist die Recheneinheit 36 dazu ausgelegt, einen ersten Auswahlbereich 56 auf der virtuellen Projektionsfläche 62 in einem ersten überlappenden Bildbereich 56 in Abhängigkeit eines Sichtbereichs 50 der virtuellen Kamera 48 zu platzieren und zumindest einen Bildparameter einer ersten Fahrzeugkamera 12 im ersten Auswahlbereich zu berechnen und zumindest einen Bildparameter einer zweiten Fahrzeugkamera 14 an den zumindest einen Bildparameter der ersten Fahrzeugkamera 12 im ersten Auswahlbereich 56 anzupassen. Vorteilhafterweise handelt es sich bei den Fahrzeugkameras 12, 14, 16, 18 um Kameras eines Surround-View-Systems, wobei insgesamt vier Kameras vorhanden sind und eine Fahrzeugkamera 12 an einer vorderen Seite, eine Fahrzeugkamera 16 an einer Rückseite, eine Fahrzeugkamera 14 an einer linken Seite und eine Fahrzeugkamera 18 an einer rechten Seite des Fahrzeugs angeordnet sind.

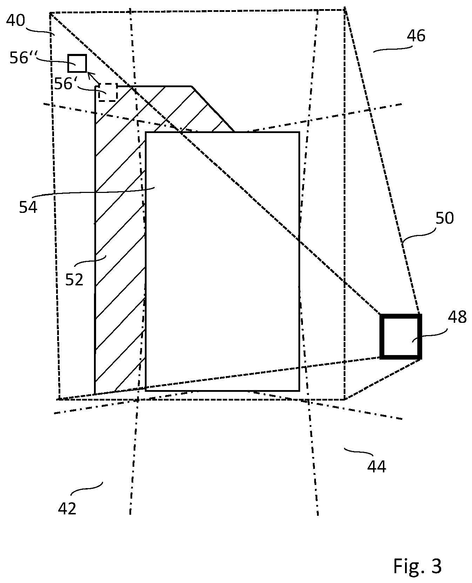

Figur 3 zeigt eine schematische Draufsicht auf eine virtuelle Repräsentation einer Fahrzeugumgebung. Bildbereiche von Kamerabildern sind durch Punkt-Strich-Linien dargestellt, wobei benachbarte Kamerabilder überlappende Bildbereiche 40, 42, 44, 46 aufweisen. Ein Fahrzeugmodell 54 ist in der virtuellen Repräsentation eingefügt. Ferner ist in Figur 3 eine virtuelle Kamera 48 dargestellt. Die virtuelle Kamera 48 ist rechts neben dem Fahrzeugmodell 54 angeordnet und weist einen Sichtbereich 50 auf, der im Wesentlichen von rechts unten nach links oben zeigt und das Fahrzeugmodell 54 umfasst (dargestellt durch eine gestrichelte Linie), wobei das Fahrzeugmodell 54 einen Bereich 52 der virtuellen Repräsentation für die virtuelle Kamera 48 verdeckt.

In dem überlappenden Bildbereich 40 einer ersten und einer zweiten Fahrzeugkamera ist ein erster Auswahlbereich 56' angeordnet. Gemäß der vorliegenden Erfindung wird der Auswahlbereich 56' in einem ersten Schritt bevorzugt an einer Standardposition angeordnet und dann wird überprüft, ob der Auswahlbereich 56' für die virtuelle Kamera 48 sichtbar ist. Ist dies nicht der Fall, dann wird der Auswahlbereich bevorzugt innerhalb des überlappenden Bildbereichs 40 verschoben. Wie Figur 3 zeigt, liegt der Auswahlbereich 56' in dem verdeckten Bereich 52 und ist folglich für die virtuelle Kamera 48 nicht sichtbar. Der erste Auswahlbereich 56' wird daher verschoben und man erhält beispielsweise den Auswahlbereich 56".

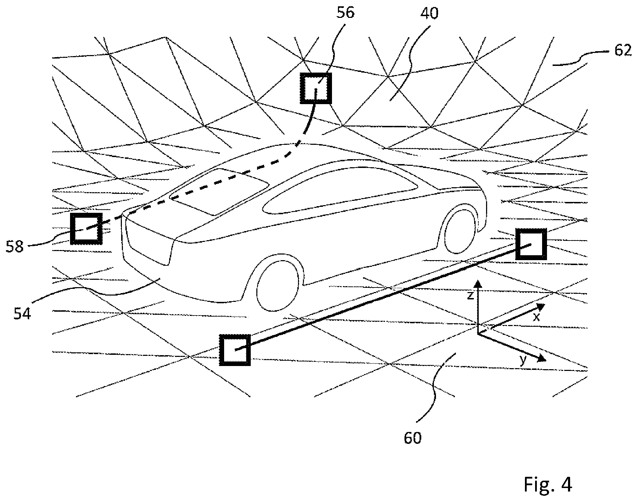

Figur 4 zeigt eine schematische Ansicht einer virtuellen Kamera. In dem virtuellen dreidimensionalen Raum 60 ist ein Fahrzeugmodell 54 eingefügt. Das Fahrzeugmodell 54 ist von einer virtuellen Projektionsfläche 62 umgeben, wobei die virtuelle Projektionsfläche 62 im Wesentlichen schüsselförmig ausgebildet ist und einen im Wesentlichen ebenen Boden aufweist und das Fahrzeugmodell 54 bevorzugt auf dem Boden angeordnet ist.

Die virtuelle Kamera ist auf einer rechten Seite hinter einem Fahrzeugmodell 54 angeordnet und zeigt in Richtung eines vorderen linken überlappenden Bildbereichs 40.

Im überlappenden Bildbereichs 40 ist ein Auswahlbereich 56 angeordnet. Der Auswahlbereich 56 ist im Wandbereich der Projektionsfläche 62 angeordnet. Der Auswahlbereich 56 liegt insbesondere nicht auf dem Boden bzw. der Auswahlbereich 56 ist oberhalb der x- und y-Achse angeordnet. Würde der Auswahlbereich 56 im überlappenden Bildbereich 40 auf der x-Achse liegen, wie es gemäß dem Stand der Technik grundsätzlich gemacht wird, würde dieser hier für die virtuelle Kamera 48 nicht sichtbar sein. Ferner ist in Figur 4 ein zweiter Auswahlbereich 58 gezeigt, der in einem überlappenden Bildbereich 42 einer zweiten und einer dritten Fahrzeugkamera angeordnet ist. Der Auswahlbereich 58 ist auf dem Boden der virtuellen Projektionsfläche 62 angeordnet, er weist somit insbesondere einen z-Koordinatenwert von 0 auf. Die Auswahlbereiche 56, 58 sind folglich nicht auf derselben Koordinatenachse angeordnet und weisen bevorzugt unterschiedliche Werte in allen 3 Koordinatenachsen auf. In den Auswahlbereichen 56, 58 wird zumindest ein Bildparameter einer der Fahrzeugkameras, die den entsprechenden überlappenden Bildbereich aufweisen, berechnet und im Anschluss daran wird zumindest ein Bildparameter einer Fahrzeugkamera, die auch den überlappenden Bildbereich aufweist, daran angepasst. Bevorzugt wird zumindest ein Bildparameter einer seitlichen Fahrzeugkamera an zumindest einen Bildparameter einer vorderen und/oder hinteren Fahrzeugkamera angepasst. Bezogen auf Figur 4 bedeutet dies, dass im Auswahlbereich 56 ein Bildparameter einer vorderen Fahrzeugkamera 20 berechnet wird und dann ein Bildparameter einer linken Fahrzeugkamera 22 angepasst wird. Im Auswahlbereich 58 wird ein Bildparameter einer hinteren Fahrzeugkamera 24 berechnet und dann wird ein Bildparameter einer linken Fahrzeugkamera 22 angepasst. Bei der Fahrzeugkamera, die beide Auswahlbereiche 56, 58 umfasst, erfolgt die Anpassung der Bildparameter zwischen den Auswahlbereichen 56, 58 bevorzugt mittels einer Interpolation. Dies ist in Figur 4 durch die Linie bzw. Kurve dargestellt, die die Auswahlbereiche 56, 58 miteinander verbindet. Anders als man es beim Stand der Technik kennt, verläuft die Linie nicht nur entlang einer einzigen Achse. Bei der Interpolation wird insbesondere die Positionen der Auswahlbereiche 56, 58 und die X-, Y- und/oder Z-Koordinatenwerte eines gegenwärtig gerenderten Punkts berücksichtigt.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird. Auch eine Kombination der verschiedenen Ausführungsbeispiele ist möglich.

### Bezugszeichenliste

- 12: erste Fahrzeugkamera
- 14: zweite Fahrzeugkamera
- 16: dritte Fahrzeugkamera
- 18: vierte Fahrzeugkamera
- 20: Sichtbereich erste Fahrzeugkamera
- 22: Sichtbereich zweite Fahrzeugkamera
- 24: Sichtbereich dritte Fahrzeugkamera
- 26: Sichtbereich vierte Fahrzeugkamera
- 28: Überlappungsbereich erste/zweite Fahrzeugkamera
- 30: Überlappungsbereich zweite/dritte Fahrzeugkamera
- 32: Überlappungsbereich dritte/vierte Fahrzeugkamera
- 34: Überlappungsbereich vierte/erste Fahrzeugkamera
- 36: Recheneinheit
- 38: Vorrichtung
- 40: überlappender Bildbereich erste/zweite Fahrzeugkamera
- 42: überlappender Bildbereich zweite/dritte Fahrzeugkamera
- 44: überlappender Bildbereich dritte/vierte Fahrzeugkamera
- 46: überlappender Bildbereich vierte/erste Fahrzeugkamera
- 48: virtuelle Kamera
- 50: Sichtbereich virtuelle Kamera
- 52: für virtuelle Kamera verdeckter Bereich
- 54: Fahrzeugmodell
- 56^{(')/(")}: erster Auswahlbereich
- 58: zweiter Auswahlbereich
- 60: virtueller dreidimensionaler Raum
- 62: virtuelle Projektionsfläche
- S1-S11: Verfahrensschritte

## Patentansprüche

1. Verfahren zur Erzeugung eines Bildes einer Fahrzeugumgebung, mit den Schritten:
- Erfassen der Fahrzeugumgebung durch mehrere Fahrzeugkameras (12, 14, 16, 18), die insbesondere an einer Fahrzeugkarosserie eines Fahrzeuges angeordnet sind (S1),
- Erzeugen von Kamerabildern durch die mehreren Fahrzeugkameras (12, 14, 16, 18), wobei die Kamerabilder benachbarter Fahrzeugkameras (12, 14, 16, 18) überlappende Bildbereiche (40, 42, 44, 46) aufweisen (S2),
- Erzeugen einer virtuellen Repräsentation der Umgebung in einem virtuellen dreidimensionalen Raum (60), wobei bei der Erzeugung ein Projizieren von den Kamerabildern auf eine virtuelle Projektionsfläche (62) in dem dreidimensionalen virtuellen Raum (60) erfolgt (S3),
- Bereitstellen einer nicht stationären virtuellen Kamera (48) im virtuellen Raum (60) und Bestimmen einer virtuellen Kameraposition und/oder einer virtuellen Kameraausrichtung (S4),
- Platzieren eines ersten Auswahlbereichs (56) auf der virtuellen Projektionsfläche (62) in einem ersten überlappenden Bildbereich (40) in Abhängigkeit eines Sichtbereichs (50) der virtuellen Kamera (48) (S5), wobei der Auswahlbereich (56') an einer Standardposition innerhalb eines (40) der überlappenden Bildbereiche (40, 42, 44, 46) platziert wird,
- Überprüfen, ob der Auswahlbereich (56') an der Standardposition für die virtuelle Kamera (48) sichtbar ist, wobei der Auswahlbereich (56'), wenn er für die virtuelle Kamera (48) nicht sichtbar ist, solange auf der virtuellen Projektionsfläche (62) innerhalb des überlappenden Bildbereichs (40) verschoben wird, bis er für die virtuelle Kamera (48) sichtbar ist,
- Berechnen zumindest eines Bildparameters einer ersten Fahrzeugkamera (12) im ersten Auswahlbereich (56) (S6),
- Anpassen zumindest eines Bildparameters einer zweiten Fahrzeugkamera (14) an den zumindest einen Bildparameter der ersten Fahrzeugkamera (12) im ersten Auswahlbereich (56) (S7).

2. Verfahren nach Anspruch 1, **gekennzeichnet durch** die folgenden Schritte:
- Platzieren eines zweiten Auswahlbereichs (58) auf der virtuellen Projektionsfläche (62) innerhalb eines zweiten überlappenden Bildbereichs (42) in Abhängigkeit des Sichtbereichs (50) der virtuellen Kamera (48) (S8),
- Berechnen zumindest eines Bildparameters einer weiteren Fahrzeugkamera (16), deren Kamerabild den zweiten überlappenden Bildbereich (42) aufweist, im zweiten Auswahlbereich (58) (S9),
- Anpassen zumindest eines Bildparameters einer anderen Fahrzeugkamera (14), deren Kamerabild ebenfalls den zweiten überlappenden Bildbereich (42) aufweist, an den zumindest einen Bildparameter der weiteren Fahrzeugkamera (16) im zweiten Auswahlbereich (58) (S10).

3. Verfahren nach Anspruch 2, **dadurch gekennzeichnet, dass** die Anpassung von Bildparametern der Fahrzeugkamera (14), die den ersten (40) und den zweiten überlappenden Bildbereich (42) aufweist, zwischen dem ersten (56) und dem zweiten Auswahlbereich (58) mittels einer Interpolation erfolgt (S11).

4. Verfahren nach Anspruch 3, **dadurch gekennzeichnet, dass** bei der Interpolation die Position des Auswahlbereichs (56, 58) bzw. die Positionen der Auswahlbereiche (56, 58) und/oder X-, Y- und Z-Koordinatenwerte eines gegenwärtig gerenderten Punkts berücksichtigt werden.

5. Verfahren nach einem der vorangehenden Ansprüche, **dadurch gekennzeichnet, dass** die Standardposition als Ausweichposition benutzt wird, wenn kein für die virtuelle Kamera (48) sichtbarer Auswahlbereich festgestellt werden kann.

6. Verfahren nach einem der vorangehenden Ansprüche, **dadurch gekennzeichnet, dass** Parameter eines Fahrzeugmodells (54) bereitgestellt werden, wobei die Parameter in dem virtuellen dreidimensionalen Raum (60) eingefügt werden.

7. Verfahren nach einem der vorangehenden Ansprüche, **dadurch gekennzeichnet, dass** es sich bei den Bildparametern um eine Bildhelligkeit, einen Bildkontrast, eine Bildfarbe, eine Bildschärfe, eine Farbsättigung und/oder eine Texturfrequenz handelt.

8. Verfahren nach einem der vorangehenden Ansprüche, **dadurch gekennzeichnet, dass** es sich bei der ersten Fahrzeugkamera (12) um eine vordere Fahrzeugkamera und/oder bei der dritten Fahrzeugkamera (16) um eine hintere Fahrzeugkamera handelt, oder dass es sich bei der ersten Fahrzeugkamera um eine hintere Fahrzeugkamera und/oder bei der dritten Fahrzeugkamera um eine vordere Fahrzeugkamera handelt.

9. Verfahren nach einem der vorangehenden Ansprüche, **dadurch gekennzeichnet, dass** es sich bei der zweiten Fahrzeugkamera (14) um eine seitliche Fahrzeugkamera, insbesondere um eine linke oder eine rechte Fahrzeugkamera, handelt.

10. Vorrichtung (38) zur Erzeugung eines Bildes einer Fahrzeugumgebung aufweisend
- mehrere Fahrzeugkameras (12, 14, 16, 18) zur Erfassung der Fahrzeugumgebung und Erzeugung von Kamerabildern, wobei die Kamerabilder benachbarter Fahrzeugkameras (12, 14, 16, 18) überlappende Bildbereiche (40, 42, 44, 46) aufweisen, und wobei die Fahrzeugkameras (12, 14, 16, 18) insbesondere an einer Fahrzeugkarosserie eines Fahrzeuges angebracht sind,
- eine Recheneinheit (36), die dazu ausgelegt ist, eine virtuelle Repräsentation der Umgebung in einem virtuellen dreidimensionalen Raum (60) zu erzeugen, wobei bei der Erzeugung ein Projizieren der Kamerabilder auf eine virtuelle Projektionsfläche (62) in dem dreidimensionalen virtuellen Raum (60) erfolgt, und
- eine nicht stationäre virtuelle Kamera (48),
**dadurch gekennzeichnet, dass** die Recheneinheit (36) ferner dazu ausgelegt ist, einen ersten Auswahlbereich (56) auf der virtuellen Projektionsfläche (62) in einem ersten überlappenden Bildbereich (56) in Abhängigkeit eines Sichtbereichs (50) der virtuellen Kamera (48) zu platzieren und zumindest einen Bildparameter einer ersten Fahrzeugkamera (12) im ersten Auswahlbereich zu berechnen und zumindest einen Bildparameter einer zweiten Fahrzeugkamera (14) an den zumindest einen Bildparameter der ersten Fahrzeugkamera (12) im ersten Auswahlbereich (56) anzupassen, wobei die Recheneinheit dazu ausgelegt ist, den Auswahlbereich (56') an einer Standardposition innerhalb eines (40) der überlappenden Bildbereiche (40, 42, 44, 46) zu platzieren und zu überprüfen, ob der Auswahlbereich (56') an der Standardposition für die virtuelle Kamera (48) sichtbar ist, wobei die Recheneinheit dazu ausgelegt ist, den Auswahlbereich (56'), wenn er für die virtuelle Kamera (48) nicht sichtbar ist, solange auf der virtuellen Projektionsfläche (62) innerhalb des überlappenden Bildbereichs (40) zu verschieben, bis er für die virtuelle Kamera (48) sichtbar ist.

11. Vorrichtung (38) nach Anspruch 10, **dadurch**
**gekennzeichnet, dass** die Recheneinrichtung (36) ferner dazu ausgelegt ist, einen zweiten Auswahlbereich (58) auf der virtuellen Projektionsfläche (62) innerhalb eines zweiten überlappenden Bildbereichs (42) in Abhängigkeit des Sichtbereichs (50) der virtuellen Kamera (48) zu platzieren, zumindest einen Bildparameter einer weiteren Fahrzeugkamera (16), deren Kamerabild den zweiten überlappenden Bildbereich (42) aufweist, im zweiten Auswahlbereich (58) zu berechnen und zumindest einen Bildparameter einer anderen Fahrzeugkamera (14), deren Kamerabild ebenfalls den zweiten überlappenden Bildbereich (42) aufweist, an den zumindest einen Bildparameter der weiteren Fahrzeugkamera (16) im zweiten Auswahlbereich (58) anzupassen.

## Claims

1. A method for generating an image of a vehicle's surroundings, comprising the following steps:
- capturing the vehicle's surroundings by means of several vehicle cameras (12, 14, 16, 18), which are in particular arranged on a vehicle body of a vehicle (S1),
- generating camera images by the multiple vehicle cameras (12, 14, 16, 18), wherein the camera images of adjacent vehicle cameras (12, 14, 16, 18) have overlapping image areas (40, 42, 44, 46) (S2),
- generating a virtual representation of the surroundings in a virtual three-dimensional space (60), wherein the generating involves projecting the camera images onto a virtual projection surface (62) in the three-dimensional virtual space (60) (S3),
- providing a non-stationary virtual camera (48) in the virtual space (60) and determining a virtual camera position and/or a virtual camera orientation (S4),
- placing a first selection area (56) on the virtual projection surface (62) in a first overlapping image area (40) depending on a viewing area (50) of the virtual camera (48) (S5), wherein the selection area (56') is placed at a standard position within one (40) of the overlapping image areas (40, 42, 44, 46),
- verifying whether the selection area (56') is visible at the standard position for the virtual camera (48), wherein, if the selection area (56') is not visible to the virtual camera (48), it is moved on the virtual projection surface (62) within the overlapping image area (40) until it is visible to the virtual camera (48),
- calculating at least one image parameter of a first vehicle camera (12) in the first selection area (56) (S6),
- adapting at least one image parameter of a second vehicle camera (14) to at least one image parameter of the first vehicle camera (12) in the first selection area (56) (S7).

2. The method according to claim 1, **characterised by** the following steps:
- placing a second selection area (58) on the virtual projection surface (62) within a second overlapping image area (42) depending on the viewing area (50) of the virtual camera (48) (S8),
- calculating at least one image parameter of another vehicle camera (16), the camera image of which has the second overlapping image area (42) in the second selection area (58) (S9),
- adjusting at least one image parameter of another vehicle camera (14), the camera image of which also has the second overlapping image area (42), to at least one image parameter of the other vehicle camera (16) in the second selection area (58) (S10).

3. The method according to claim 2, **characterised in that** the adjusting of image parameters of the vehicle camera (14), which has the first (40) and the second overlapping image area (42), is carried out between the first (56) and the second selection area (58) by means of interpolation (S11).

4. The method according to claim 3, **characterised in that** the interpolation takes into account the position of the selection area (56, 58) or the positions of the selection areas (56, 58), and/or X, Y and Z coordinate values of a currently rendered point.

5. The method according to any one of the preceding claims, **characterised in that** the standard position is used as a fallback position if no selection area visible to the virtual camera (48) can be determined.

6. The method according to any one of the preceding claims, **characterised in that** parameters of a vehicle model (54) are provided, wherein the parameters are inserted into the virtual three-dimensional space (60).

7. The method according to any one of the preceding claims, **characterised in that** the image parameters are image brightness, image contrast, image colour, image sharpness, colour saturation, and/or texture frequency.

8. The method according to any one of the preceding claims, **characterised in that** the first vehicle camera (12) is a front vehicle camera, and/or the third vehicle camera (16) is a rear vehicle camera, or that the first vehicle camera is a rear vehicle camera and/or the third vehicle camera is a front vehicle camera.

9. The method according to any one of the preceding claims, **characterised in that** the second vehicle camera (14) is a side vehicle camera, in particular a left or a right vehicle camera.

10. An apparatus (38) for generating an image of vehicle surroundings comprising
- several vehicle cameras (12, 14, 16, 18) for capturing the vehicle surroundings and generating camera images, wherein the camera images of adjacent vehicle cameras (12, 14, 16, 18) have overlapping image areas (40, 42, 44, 46), and wherein the vehicle cameras (12, 14, 16, 18) are in particular mounted on a vehicle body of a vehicle,
- a computing unit (36) configured to generate a virtual representation of the surroundings in a virtual three-dimensional space (60), wherein the generating involves projecting the camera images onto a virtual projection surface (62) in the three-dimensional virtual space (60), and
- a non-stationary virtual camera (48), **characterised in that** the computing unit (36) is further configured to place a first selection area (56) on the virtual projection surface (62) in a first overlapping image area (56) depending on a viewing area (50) of the virtual camera (48), and to calculate at least one image parameter of a first vehicle camera (12) in the first selection area and to adapt at least one image parameter of a second vehicle camera (14) to the at least one image parameter of the first vehicle camera (12) in the first selection area (56), wherein the computing unit is configured to place the selection area (56') at a standard position within one (40) of the overlapping image areas (40, 42, 44, 46), and to verify whether the selection area (56') is visible at the standard position for the virtual camera (48), wherein the computing unit is configured to move the selection area (56'), if it is not visible to the virtual camera (48), on the virtual projection surface (62) within the overlapping image area (40) until it becomes visible to the virtual camera (48).

11. The apparatus (38) according to claim 10, **characterised in that** the computing unit (36) is further configured to place a second selection area (58) on the virtual projection surface (62) within a second overlapping image area (42) depending on the viewing area (50) of the virtual camera (48), to calculate at least one image parameter of another vehicle camera (16), the camera image of which has the second overlapping image area (42), in the second selection area (58) and to adapt at least one image parameter of another vehicle camera (14), the camera image of which also has the second overlapping image area (42), to the at least one image parameter of the other vehicle camera (16) in the second selection area (58).

## Revendications

1. Procédé pour générer une image de l'environnement d'un véhicule, comprenant les étapes :
- de saisie de l'environnement de véhicule au moyen de plusieurs caméras de véhicule (12, 14, 16, 18), qui sont en particulier disposées sur une carrosserie de véhicule d'un véhicule (S1),
- de génération d'images de caméra au moyen des plusieurs caméras de véhicule (12, 14, 16, 18), dans lequel les images de caméra de caméras de véhicule adjacentes (12, 14, 16, 18) présentent des zones d'image superposées (40, 42, 44, 46) (S2),
- de génération d'une représentation virtuelle de l'environnement dans un espace virtuel tridimensionnel (60), dans lequel, lors de la génération, une projection des images de caméra intervient sur une surface de projection virtuelle (62) dans l'espace virtuel tridimensionnel (60) (S3),
- de mise à disposition d'une caméra virtuelle non stationnaire (48) dans l'espace virtuel (60) et de détermination d'une position de caméra virtuelle et/ou une orientation de caméra virtuelle (S4),
- de placement d'une première zone de sélection (56) sur la surface de projection virtuelle (62) dans une première zone d'image superposée (40) en fonction d'un champ de vision (50) de la caméra virtuelle (48) (S5), dans lequel la zone de sélection (56') est placée à une position standard à l'intérieur de l'une (40) des zones d'image superposées (40, 42, 44, 46),
- du fait de vérifier si la zone de sélection (56') est visible pour la caméra virtuelle (48) à la position standard, dans lequel la zone de sélection (56'), lorsqu'elle n'est pas visible pour la caméra virtuelle (48), est déplacée sur la surface de projection virtuelle (62) à l'intérieur de la zone d'image superposée (40) jusqu'à ce qu'elle soit visible pour la caméra virtuelle (48),
- de calcul d'au moins un paramètre d'image d'une première caméra de véhicule (12) dans la première zone de sélection (56) (S6),
- d'adaptation d'au moins un paramètre d'image d'une deuxième caméra de véhicule (14) audit au moins un paramètre d'image de la première caméra de véhicule (12) dans la première zone de sélection (56) (S7).

2. Procédé selon la revendication 1, **caractérisé par** les étapes suivantes :
- le placement d'une seconde zone de sélection (58) sur la surface de projection virtuelle (62) à l'intérieur d'une seconde zone d'image superposée (42) en fonction du champ de vision (50) de la caméra virtuelle (48) (S8),
- le calcul d'au moins un paramètre d'image d'une autre caméra de véhicule (16), dont l'image de caméra présente la seconde zone d'image superposée (42), dans la seconde zone de sélection (58) (S9),
- l'adaptation d'au moins un paramètre d'image d'une autre caméra de véhicule (14), dont l'image de caméra présente également la seconde zone d'image superposée (42), à l'au moins un paramètre d'image de l'autre caméra de véhicule (16) dans la seconde zone de sélection (58) (S10).

3. Procédé selon la revendication 2, **caractérisé en ce que** l'adaptation des paramètres d'image de la caméra de véhicule (14), qui présente la première (40) et la seconde zone d'image superposée (42), intervient entre la première (56) et la seconde zone de sélection (58) au moyen d'une interpolation (S11).

4. Procédé selon la revendication 3, **caractérisé en ce que**, lors de l'interpolation, il est tenu compte de la position de la zone de sélection (56, 58) ou des positions des zones de sélection (56, 58) et/ou des valeurs de coordonnées X, Y et Z d'un point en cours de rendu.

5. Procédé selon l'une quelconque des revendications précédentes, **caractérisé en ce que** la position standard est utilisée en tant que position de repli lorsqu'aucune zone de sélection visible pour la caméra virtuelle (48) ne peut être déterminée.

6. Procédé selon l'une quelconque des revendications précédentes, **caractérisé en ce que** des paramètres d'un modèle de véhicule (54) sont mis à disposition, dans lequel les paramètres sont insérés dans l'espace virtuel tridimensionnel (60).

7. Procédé selon l'une quelconque des revendications précédentes, **caractérisé en ce que** les paramètres d'image sont une luminosité d'image, un contraste d'image, une couleur d'image, une netteté d'image, une saturation des couleurs et/ou une fréquence de texture.

8. Procédé selon l'une quelconque des revendications précédentes, **caractérisé en ce que** la première caméra de véhicule (12) est une caméra de véhicule avant et/ou la troisième caméra de véhicule (16) est une caméra de véhicule arrière, ou **en ce que** la première caméra de véhicule est une caméra de véhicule arrière et/ou la troisième caméra de véhicule est une caméra de véhicule avant.

9. Procédé selon l'une quelconque des revendications précédentes, **caractérisé en ce que** la deuxième caméra de véhicule (14) est une caméra latérale de véhicule, en particulier une caméra de véhicule gauche ou droite.

10. Dispositif (38) de génération d'une image d'un environnement de véhicule, présentant
- plusieurs caméras de véhicule (12, 14, 16, 18) destinées à la saisie de l'environnement de véhicule et à la génération d'images de caméra, dans lequel les images de caméra de caméras de véhicule adjacentes (12, 14, 16, 18) présentent des zones d'image superposées (40, 42, 44, 46), et dans lequel les caméras de véhicule (12, 14, 16, 18) sont en particulier montées sur une carrosserie de véhicule d'un véhicule,
- une unité de calcul (36), conçue pour générer une représentation virtuelle de l'environnement dans un espace virtuel tridimensionnel (60), dans lequel, lors de la génération, une projection des images de caméra intervient sur une surface de projection virtuelle (62) dans l'espace virtuel tridimensionnel (60), et
- une caméra virtuelle non stationnaire (48), **caractérisé en ce que** l'unité de calcul (36) est en outre conçue pour placer une première zone de sélection (56) sur la surface de projection virtuelle (62) dans une première zone d'image superposée (56) en fonction d'un champ de vision (50) de la caméra virtuelle (48) et pour calculer au moins un paramètre d'image d'une première caméra de véhicule (12) dans la première zone de sélection, et pour adapter au moins un paramètre d'image d'une deuxième caméra de véhicule (14) audit au moins un paramètre d'image de la première caméra de véhicule (12) dans la première zone de sélection (56), dans lequel l'unité de calcul est conçue pour placer la zone de sélection (56') à une position standard à l'intérieur de l'une (40) des zones d'image superposées (40, 42, 44, 46) et pour vérifier si la zone de sélection (56') est visible pour la caméra virtuelle (48) à la position standard, dans lequel l'unité de calcul est conçue pour déplacer la zone de sélection (56'), lorsqu'elle n'est pas visible pour la caméra virtuelle (48), sur la surface de projection virtuelle (62) à l'intérieur de la zone d'image superposée (40) jusqu'à ce qu'elle soit visible pour la caméra virtuelle (48).

11. Dispositif (38) selon la revendication 10, **caractérisé en ce que** l'unité de calcul (36) est en outre conçue pour placer une seconde zone de sélection (58) sur la surface de projection virtuelle (62) à l'intérieur d'une seconde zone d'image superposée (42) en fonction du champ de vision (50) de la caméra virtuelle (48), pour calculer au moins un paramètre d'image d'une caméra de véhicule supplémentaire (16), dont l'image de caméra présente la seconde zone d'image superposée (42), dans la seconde zone de sélection (58), et pour adapter au moins un paramètre d'image d'une autre caméra de véhicule (14), dont l'image de caméra présente également la seconde zone d'image superposée (42), à l'au moins un paramètre d'image de la caméra de véhicule supplémentaire (16) dans la seconde zone de sélection (58).
